# EUROPEAN PATENT APPLICATION

(11) **EP 4 796 924 A1**
(43) Date of publication of application: **26.08.2026**
(21) Application number: 26159652.2
(22) Date of filing: 19.02.2026
(51) Int. Cl.: G01N 30/60

(54) **CHROMATOGRAPHY COLUMN FLUID DISTRIBUTION SYSTEM**

(30) Priority: 21.02.2025 US 202563761453 P
(71) Applicant: Diba Industries, Inc., Danbury, CT 06810 (US)
(72) Inventor: WRIGHT, Paul Justin, Danbury, Connecticut 06810 (US); SIMPSON, Allan Clive, Danbury, Connecticut 06810 (US)
(74) Representative: Wittmer, Maximilian

(57) **Abstract**

A fluid distribution system (144) for a chromatography column (100) comprises a sample introduction module (146) and a flow distribution module (250) positioned on a distal side (240-2) of the sample introduction module (146). The sample introduction module (146) comprises an inlet tube adapter (242a) at a proximal side (240-1) of the sample introduction module (146), wherein the inlet tube adapter (242a) is configured for fluidic connection with an inlet tube (102) of the chromatography column (100); and a central fluid passageway (242c) extending from the inlet tube adapter (242a) to the distal side (240-2) of the sample introduction module (146). The flow distribution module (250) comprises: a plurality of flow distribution arms (252) extending radially outward from an axial center of the flow distribution module (250), wherein each flow distribution arm (252) comprises a groove (252a) that extends along the flow distribution arm (252) and faces toward a distal end surface (146b) of the sample introduction module (146); and a plurality of central openings that extend through the flow distribution module (250).

## Description

### FIELD

The present disclosure is generally directed to fluid distribution systems for chromatography columns.

### TECHNICAL BACKGROUND

Liquid chromatography, typically performed using chromatography columns, is a widely used technique for separating components of a mixture. The separation occurs based on the differing interactions in which each component of the mixture has with mobile and stationary phases employed in the technique. The mobile phase carrying the mixture is forced to migrate through the stationary phase, which effects separation of components in the mixture. Owing to the many different combinations of stationary and mobile phases that can be utilized, the technique is versatile and can be used in an array of applications of varying scales from microscale separations in analytical chemistry to large-scale industrial purifications.

Chromatography columns typically incorporate a main tube with one end serving as a fluid inlet that allows for the delivery of the sample in the mobile phase, and the other end serving as a fluid outlet that allows for the fractionated sample, carried by the eluent, to exit the column. The main tube is capped at each end and functions as a reservoir for containing the stationary phase. The stationary phase is loaded via a process called packing to form a packed bed, and typically comprises alumina, silica, or synthetic or natural polymer gel resin beads ranging in size from one micron to several hundred microns in diameter. However, while chromatography columns are widely used to carry out separations, existing column constructs and formats have several drawbacks and limitations creating opportunities for improvement with respect to the chromatographic performance and operation of the columns.

### SUMMARY

The present application addresses the above-discussed opportunities by providing design improvements which increase the chromatographic performance of chromatography columns.

One particular design improvement provided by the present disclosure relates to the fluid distribution system of the chromatography column where liquid, typically from a single tube, is introduced to the column and distributed over the surface of the packed bed. In conventional fluid distribution systems, a central cylindrical bore is provided through an endpiece at the fluid inlet side of the main tube where fluid delivered through the cylindrical bore is radially distributed within a thin gap region provided between the terminal end of the cylindrical bore and a bed support frit or mesh. However, this design causes the sample liquid to "jet" out of the end of the cylindrical bore without being able to spread evenly across the bed surface, thereby creating radial pressure gradients and flow differential issues across the head of the packed bed that limit the quality of the chromatographic separation, for example, in terms of efficiency, resolution, and band broadening of the separated test sample.

During typical operation of a chromatography column, when a desired flow of liquid is established through the packed bed, a bolus of sample (a mixture of desired components and contaminants) is introduced into the flow and then enters the chromatography column. This bolus is in the form of a column of sample liquid travelling through in an inlet tube and being subjected to equal pressure across its cross section (apart from the stationary liquid boundary layer in contact with the inner wall of the tube). Upon arrival at the head of the packed bed, this column of liquid needs to be converted into a flat disc of sample liquid for entering the packed bed. This transition involves a change in the physical characteristics of the fluid liquid as the fluid flows from the inlet tube to an exponentially larger column (e.g., from a diameter of about 0.3 mm to about 100 mm or larger). This disc must be as thin and flat as possible, taking into account the diameter of the packed bed. Any pressure or flow differential across the disc can lead to dilution of the formed disc and may compromise the chromatographic performance of the packed bed in terms of both the ability of the packed bed to maintain a flat and shallow disc of sample bolus as well as the ability of the packed bed to efficiently separate components of the sample bolus into separate discs. Additionally, when flow of the elution liquid which follows the sample bolus is compositionally varied with time (gradually or with step changes), it is important for this compositional variation (e.g., buffer strength, ionic strength, concentrations, mobile phase components, etc.) to be uniform across the cross-section of the packed bed. In other words, as with the sample bolus, liquid columns of elution liquid having differing compositions must also be converted into succeeding flat discs for entering the packed bed.

The chromatographic performance of the packed bed in a chromatography column may be improved by ensuring that the liquid (e.g., the sample bolus and elution buffers/solvents) is introduced to the bed surface so as to maintain uniform pressure and fluid velocity across the surface of the packed bed. In embodiments of the present disclosure, fluid distribution systems combine a channeled sample introduction module at the head of the packed bed with a central anti-jet member located between the terminal end of the central bore of the inlet endpiece and the surface of the packed bed. In some embodiments, a flow distribution module is coupled to a sample introduction module to improve radial pressure and fluid velocity uniformity across the surface of the packed bed and along the length of the column. The use of the flow distribution module or the combination of the channeled sample introduction module and central anti-jet member allows fluid introduced through the inlet endpiece to spread out radially in a controlled and uniform manner, thereby avoiding problematic pressure gradients and flow differential issues which would otherwise disturb the integrity of the composition flow and the uniformity of the disc(s) of the sample bolus. The fluid distribution systems of the present disclosure are also designed to faithfully and accurately delivery the correct elution liquid compositional gradient profile to the packed bed. In this manner, the chromatography columns described herein offer improved sample separation performance relative to existing chromatography columns with respect to their ability to uniformly introduce the sample liquid to the surface of the packed bed.

Some embodiments of the present disclosure are directed to a fluid distribution system, the fluid distribution system comprising a sample introduction module and a flow distribution module positioned on a distal side of the sample introduction module, wherein: the sample introduction module comprises an inlet tube adapter at a proximal side of the sample introduction module, wherein the inlet tube adapter is configured for fluidic connection with an inlet tube; and a central fluid passageway extending from the inlet tube adapter to the distal side of the sample introduction module; and the flow distribution module comprises: a plurality of flow distribution arms extending radially outward from an axial center of the flow distribution module, wherein each flow distribution arm comprises a groove that extends along the flow distribution arm and faces toward a distal end surface of the sample introduction module; and a plurality of central openings that extend through the flow distribution module in an axial direction of the flow distribution module, wherein each central opening of the plurality of central openings is defined at least in part by edges of adjacent flow distribution arms of the plurality of flow distribution arms.

Embodiments are also directed to chromatography columns comprising: a main tube assembly comprising: an inlet end; an outlet end opposite the inlet end along an axial direction of the main tube assembly; and a main tube extending between the inlet end and the outlet end; an inlet adapter assembly coupled to the inlet end of the main tube assembly, the inlet adapter assembly comprising an inlet endpiece comprising an elongated stem with a bore extending longitudinally through the elongated stem, wherein a distal end of the elongated stem is inserted into the main tube at the inlet end of the main tube assembly; an inlet tube extending through the bore of the elongated stem from a proximal end of the elongated stem to the distal end of the elongated stem; and a fluid distribution system described herein coupled to the distal end of the elongated stem, wherein the inlet tube adapter is fluidically connected to the inlet tube.

The chromatographic performance of the packed bed in a chromatography column may be improved by ensuring that the liquid (e.g., the sample bolus and elution buffers/solvents) is introduced to the bed surface in a manner that avoids the mixing of the succeeding flat discs that enter the packed bed. Specifically, the performance of the chromatography column in terms of flow and sample integrity may also be improved by avoiding over compression of the bed and the creation of voids above the surface of the packed bed. The axial position of the inlet endpiece within the column is typically adjusted by rotating a component that is rigidly fixed to the inlet endpiece and in threaded engagement with the inlet side of the column. However, the packed bed may be damaged and compacted if a user moves the endpiece too far into the column thereby over compressing the bed. In order to lock the endpiece at a particular axial position associated with a desired bed height, some existing chromatography columns implement a height-locking mechanism that is engaged by mechanically coupling one component with another having a finite number of teeth with a corresponding finite number of lock positions and bed heights. However, when a user activates such locks (e.g., by pressing a button), some unwanted axial movement of the endpiece occurs as the lock adjusts to one of the finite number of lock positions. Accordingly, conventional column height locks often produce either a void above the bed surface or over compression of the packed bed, both of which diminish the performance of the chromatography columns.

The present disclosure addresses this problem by providing a height-locking mechanism that can be activated at any bed height without unwanted axial movement of the endpiece into or out of the column. Specifically, the height-locking mechanisms of the present disclosure are activated by mechanically decoupling (as opposed to coupling) complementary locking structures wherein the mechanical decoupling can be performed at any bed height without unwanted axial movement of the endpiece into or out of the column. Accordingly, embodiments of the chromatography columns described herein offer improved performance relative to existing chromatography columns as a result of their ability to avoid both over compression of the packed bed and the creation of voids above the surface of the packed bed.

Additional features and advantages of the embodiments described herein will be set forth in the detailed description which follows, and in part will be readily apparent to those skilled in the art from that description or recognized by practicing the embodiments described herein, including the detailed description which follows as well as the appended drawings.

It is to be understood that both the foregoing general description and the following detailed description describe various embodiments and are intended to provide an overview or framework for understanding the nature and character of the subject matter of the present disclosure. The accompanying drawings are included to provide a further understanding of the various embodiments, and are incorporated into and constitute a part of this specification. The drawings illustrate the various embodiments described herein, and together with the description serve to explain the principles and operations of the subject matter of the present disclosure.

### BRIEF DESCRIPTION OF THE DRAWINGS

The embodiments set forth in the drawings are illustrative and exemplary in nature and not intended to limit the subject matter of the present disclosure. The following detailed description of the illustrative embodiments can be understood when read in conjunction with the following drawings, where like structure is indicated with like reference numerals and in which:
FIG. 1 schematically depicts a chromatography column, according to one or more embodiments described herein;
FIG. 2 schematically depicts a cross-section of an inlet adapter assembly of a chromatography column, according to one or more embodiments described herein;
FIG. 3 schematically depicts a fluid distribution system coupled to an inlet endpiece of a chromatography column, wherein the fluid distribution system includes an anti-jet member, according to one or more embodiments described herein;
FIG. 4 is a cross sectional view of the fluid distribution system shown in FIG. 3, according to one or more embodiments described herein;
FIG. 5 schematically depicts a fluid distribution system including a porous support plate coupled thereto, according to one or more embodiments described herein;
FIG. 6 schematically depicts another embodiment of a fluid distribution system coupled to an inlet endpiece of a chromatography column, wherein the fluid distribution system includes a flow distribution module, according to one or more embodiments described herein;
FIG. 7 is a cross sectional view of the fluid distribution system shown in FIG. 6, according to one or more embodiments described herein;
FIG. 8 is a partial cross sectional view of the fluid distribution system shown in FIG. 6, showing the proximal side of the flow distribution module, according to one or more embodiments described herein;
FIG. 9A schematically depicts a partial cut-away view of an inlet adapter assembly provided with a height-lock mechanism in an activated state wherein a translating member of the adapter assembly is in a release position, according to one or more embodiments described herein;
FIG. 9B is a perspective cross-sectional view of the inlet adapter assembly shown in FIG. 4A, according to one or more embodiments described herein;
FIG. 9C is a partial cut-away top view of the inlet adapter assembly shown in FIG. 4A, according to one or more embodiments described herein;
FIG. 10A schematically depicts a partial cut-away view of an inlet adapter assembly provided with a height-lock mechanism in a deactivated state wherein the translating member of the adapter assembly is in a locking position, according to one or more embodiments described herein;
FIG. 10B is a perspective cross-sectional view of the inlet adapter assembly shown in FIG. 5A, according to one or more embodiments described herein;
FIG. 10C is a cut-away top view of the inlet adapter assembly shown in FIG. 5A, according to one or more embodiments described herein;
FIG. 11A schematically depicts an inlet adapter assembly having alignment features, according to one or more embodiments described herein;
FIG. 11B schematically depicts an inner end cap of the inlet adapter assembly shown in FIG. 6A, according to one or more embodiments described herein;
FIG. 12A schematically depicts a perspective view of an inlet adapter assembly provided with a height-locking mechanism in an activated state wherein a translating member of the adapter assembly is in a release position, according to one or more embodiments described herein;
FIG. 12B is a perspective cross-sectional view of the inlet adapter assembly shown in FIG. 12A, according to one or more embodiments described herein;
FIG. 12C is another perspective cross-sectional view of the inlet adapter assembly shown in FIG. 12A, according to one or more embodiments described herein;
FIG. 13A schematically depicts a perspective view of an inlet adapter assembly provided with a height-locking mechanism in an deactivated state wherein a translating member of the adapter assembly is in a locking position, according to one or more embodiments described herein;
FIG. 13B is a perspective cross-sectional view of the inlet adapter assembly shown in FIG. 13A, according to one or more embodiments described herein;
FIG. 13C is another perspective cross-sectional view of the inlet adapter assembly shown in FIG. 13A, according to one or more embodiments described herein;
FIG. 13D is a perspective partial cut-away view of the inlet adapter assembly shown in FIG. 13A, according to one or more embodiments described herein; and
FIG. 13E is a magnified partial cut-away view of the inlet adapter assembly shown in FIG. 13D, according to one or more embodiments described herein.

### DETAILED DESCRIPTION

Reference will now be made in greater detail to various embodiments, some embodiments of which are illustrated in the accompanying drawings. Whenever possible, the same reference numerals will be used throughout the drawings to refer to the same or similar parts.

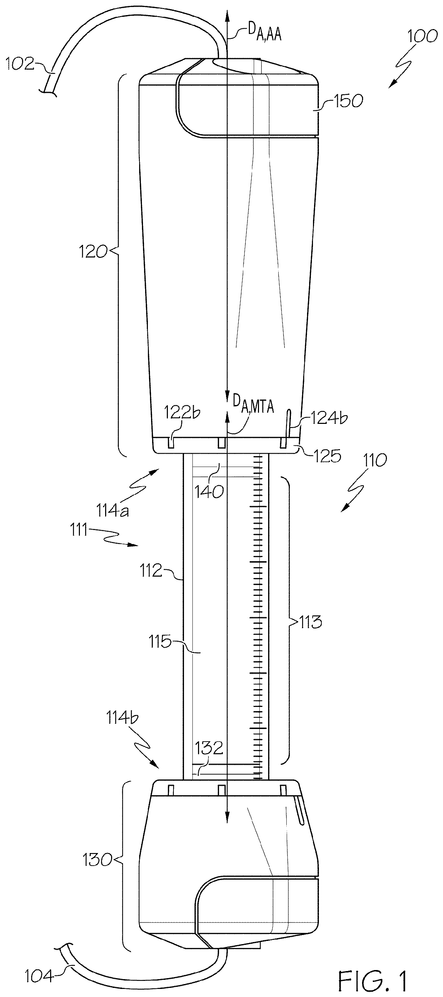

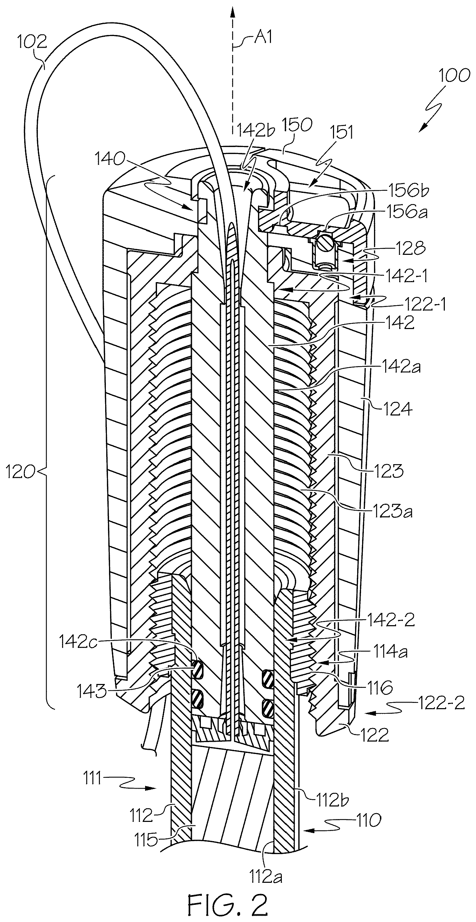

Referring now to FIGS. 1 and 2, an embodiment of a chromatography column 100 is now discussed in detail. The chromatography column 100 comprises a main tube assembly 110, an inlet adapter assembly 120, and an outlet adapter assembly 130. The main tube assembly 110 comprises a main tube 111 having a tubular sidewall 112 extending between a first, inlet end 114a of the main tube assembly 110 and a second, outlet end 114b of the main tube assembly 110, wherein the outlet end 114b is opposite the inlet end 114a along an axial direction D_{A,MTA} of the main tube assembly 110. The axial direction D_{A,MTA} of the main tube assembly 110 may be defined by a central axis of the main tube 111. The tubular sidewall 112 comprises an inner surface 112a and an outer surface 112b. The inlet adapter assembly 120 comprises an inlet endpiece 140 and the outlet adapter assembly 130 comprises an outlet endpiece 132, which together with the inner surface 112a of the tubular sidewall 112, define a reservoir 113 within the main tube 111 for containing a stationary phase 115. In embodiments, the stationary phase 115 may be contained within the reservoir 113 between an inlet porous support plate (not shown in FIGS. 1 and 2) coupled to the inlet endpiece 140 and an outlet porous support plate (not shown) coupled to the outlet endpiece 132. The stationary phase 115 may be loaded via a process called packing to form a packed bed, and typically comprises alumina, silica, or synthetic or natural polymer gel resin beads ranging in size from one micron to several hundred microns.

The main tube assembly 110 may further comprise an inlet retainer 116 coupled to the main tube 111 at the inlet end 114a and an outlet retainer 118 coupled to the main tube 111 at the outlet end 114b. The inlet retainer 116 is configured for connection with the inlet adapter assembly 120. The outlet retainer 118 is configured for connection with the outlet adapter assembly 130 and may be structurally identical to the inlet retainer 116. The chromatography column 100 may further comprise an inlet tube 102 in fluid connection with the inlet adapter assembly 120 and an outlet tube 104 in fluid connection with the outlet adapter assembly 130. The inlet tube 102 is configured to deliver fluid (e.g., a mixture in a mobile phase) to the inlet adapter assembly 120, which then delivers the fluid to the reservoir 113. In operation, the fluid introduced to the main tube assembly 110 is forced to migrate through the stationary phase 115, which effects separation of components within the mixture contained in the fluid. Once the mixture has been delivered to the reservoir, additional mobile phase liquid (e.g., buffer or solvent) may be delivered to and through the main tube assembly 110 to further effect separation of components within the mixture. The outlet tube 104 receives the fractionated mixture, carried by the eluent, from the outlet adapter assembly 130 as it exits the reservoir 113.

In embodiments, the inlet adapter assembly 120 comprises an inner end cap 122 and an outer end cap 124 surrounding the inner end cap 122, and the inlet endpiece 140 may be coupled to the inner end cap 122. The inner end cap 122 may be coupled to the inlet end 114a of the main tube assembly 110, for example, via a threaded connection with the inlet retainer 116 of the main tube assembly 110. For example, the inner end cap 122 may comprise a sidewall 123 having a threaded surface 123a (e.g., an interior threaded surface) configured for threaded engagement with the inlet end 114a of the main tube assembly 110. In embodiments, the inlet endpiece 140 is axially constrained with respect to the inner end cap 122 such that rotation of the inner end cap 122 relative to the main tube assembly 110 causes axial movement of the inlet endpiece 140 within a main tube 111 of the main tube assembly 110. Specifically, rotating the inner end cap 122 relative to the main tube assembly 110 causes the inlet adapter assembly 120 to move axially toward or away (depending on the type of threaded connection and the direction of rotation) from the main tube assembly 110. Moreover, axial movement of the inlet adapter assembly 120 causes a corresponding axial movement of the inlet endpiece 140 into and out the main tube 111. Therefore, rotation of the inner end cap 122 relative to the main tube assembly 110 may be used to control the axial position of the inlet endpiece 140 and the corresponding level of compression on the stationary phase 115 provided in the reservoir 113 of the main tube assembly 110.

The inner end cap 122 may be further coupled to the outer end cap 124 via corresponding features on the inner end cap 122 and the outer end cap 124. For example, one or more projections (not shown) in the outer end cap 124 may be configured for engagement with corresponding one or more grooves (not shown) provided in the inner end cap 122, or vice versa. In embodiments, the inner end cap 122 is axially constrained with respect to the outer end cap 124, for example, via interlocking structural features of the inner end cap 122, the outer end cap 124, and the inlet endpiece 140, as shown in FIG. 2 at the proximal end of the inlet endpiece 140. In this manner, the inner end cap 122 and outer end cap 124 may be axially fixed with respect to each other, but capable of rotating with respect to each other around a central axis A1 of the chromatography column 100.

The inlet endpiece 140 may comprise an elongated stem 142 with an outer surface 142a and a bore 142b extending longitudinally through the elongated stem 142. In some embodiments, the bore 142b may be a central bore that extends axially through the elongated stem 142. However, in other embodiments, the bore 142b may be at least partially open-sided to form an elongated recess or slot along the length of the elongated stem 142. The elongated stem 142 comprises a proximal end 142-1 and a distal end 142-2 opposite the proximal end 142-1 along a longitudinal direction of the elongated stem 142, wherein the distal end 142-2 is configured for insertion into the main tube 111 of the chromatography column 100. The bore 142b may be configured to receive the inlet tube 102 which may extend through the bore 142b from the proximal end 142-1 to the distal end 142-2, as shown in FIG. 2. One or more O-rings 143 may be provided around the outer surface 142a (e.g., in corresponding O-ring grooves 142c) near the distal end 142-2 of the elongated stem 142 for providing a fluidic seal between the outer surface 142a of the elongated stem 142 and the inner surface 112a of the tubular sidewall 112.

The diameter of the chromatography column can vary significantly depending on the particular application and chromatographic separations to be performed. In some embodiments, the diameter (inner or outer) of the column may be from 3 mm to 2,000 mm. In some specific embodiments, the diameter of the column may be from 3 mm to 100 mm, from 3 mm to 50 mm, from 3 mm to 25 mm, or from 3 mm to 10 mm.

As shown in FIG. 2, a fluid distribution system 144 may be coupled to the distal end 142-2 of the elongated stem 142 and may form a fluidic connection with an end 102-1 of the inlet tube 102 extending through the elongated stem 142 from the proximal end 142-1 to the distal end 142-2. In embodiments, the fluid distribution system 144 may be removably coupled to the distal end 142-2 of the elongated stem 142, which may be beneficial in situations where the fluid distribution system 144 needs to be discarded and replaced, e.g., when the use of radioactive tracers and/or biohazards contaminate the fluid channels of the fluid distribution system 144. Such embodiments may be advantageous relative to conventional fluid distribution techniques as the entire inlet adaptor assembly, or even the entire column, does not need to be discarded after such contaminating substances pass through the system and contact the interior components. Rather, in such embodiments, only the fluid distribution system 144 could be replaced and the other components cleaned and reused.

The axial position of the inlet adapter assembly 120 relative to the main tube assembly 110 (i.e., along the central axis A1 of the chromatography column 100) may be modified by movement of the inlet adapter assembly 120 toward or away from the main tube assembly 110, e.g., via adjustment of a threaded connection (shown in FIG. 2) between the inner end cap 122 of the inlet adapter assembly 120 and the inlet retainer 116 of the main tube assembly 110. The O-rings 143 and threaded connection and between the inner end cap 122 and the inlet retainer 116 may provide sufficient friction such that without manual rotation of the inner end cap 122 relative to the main tube assembly 110, the inlet endpiece 140 will not be movable into and out of the main tube 111. However, the height-locking mechanism described herein may be activated such that the outer end cap 124 and the inner end cap 122 are rotationally unconstrained from one another, thereby preventing manual rotation of the inner end cap 122 via rotation of the outer end cap 124 as well as corresponding axial movements of the inlet endpiece 140 relative to the main tube assembly 110.

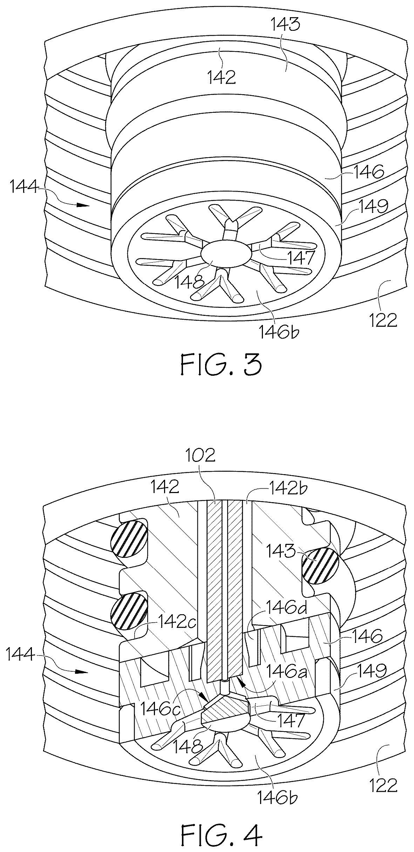

FIGS. 3 and 4 schematically depict an embodiment of a fluid distribution system 144 comprising a sample introduction module 146 fluidly connected to the inlet tube 102 via an inlet tube adapter 146a. The inlet tube adapter 146a may comprise a cylindrical bore configured to receive the end 102-1 of the inlet tube 102 and fluidly connect the inlet tube 102 to a central fluid passageway of the sample introduction module 146. In the embodiment shown in FIGS. 3 and 4, the sample introduction module 146 may include the inlet tube adapter 146a as a projecting portion that defines the cylindrical bore therein. A gripping element 146d (e.g., a gripping ring) may surround the projecting portion of the inlet tube adapter 146a to help secure the inlet tube 102 to the sample introduction module 146 and to improve the seal between the outer surface of the inlet tube 102 and the inlet tube adapter 146a. The inlet tube 102 and the sample introduction module 146 could also be joined together using an adhesive or by ultrasonic welding. Without wishing to be bound by theory, it is believed that a welded connection between the inlet tube 102 and the sample introduction module 146 may help reduce or eliminate dead volume where sample components are held in a non-flow space thereby leading to "band broadening" caused by these sample components slowly bleeding into the following flow of elution liquid.

The sample introduction module 146 may comprise a distal end surface 146b on a side of the sample introduction module 146 opposite the inlet tube adapter 146a. The sample introduction module 146 may further comprise and a central recess 146c configured to receive an anti-jet member 148. The sample introduction module 146 may further comprise a plurality of distribution channels 147 fluidly connected to the inlet tube adapter 146a via the central fluid passageway. The plurality of distribution channels 147 may extend radially outwards to allow for the delivery of fluid from the inlet tube 102, through the sample introduction module 146, and out of the sample introduction module 146 at the distal end surface 146b where the plurality of distribution channels 147 terminate. As shown in FIG. 4, the anti-jet member 148 may be secured within the central recess 146c of the sample introduction module 146 (e.g., by compressing fitting, adhesive, etc.) and may at least partially define the distribution channels of the plurality of distribution channels 147. In this manner, the anti-jet member 148 forces fluid to flow radially outward and axially downwards from the inlet tube adapter 146a through the plurality of distribution channels 147 to the distal end surface 146b.

Including the anti-jet member 148 as a separate, removable component of the fluid distribution system 144 shown in FIGS. 3 and 4 may provide a number of practical benefits. For example, differently shaped anti-jet members 148 (e.g., with respect to the upper surface of the anti-jet member 148 depicted in FIG. 4) may affect the shape of the distribution channels and the fluid flow distribution and flow rate through the sample introduction module 146. As different types of packing (e.g., resin beads) used for chromatography columns have different particle sizes, surface characteristics, and chemical characteristics, the shape of the anti-jet member 148 may be selected to provide a range of optimized flow patterns for different packing types. Additionally, chromatographers use a wide range of sample types and mobile phase types that are associated with different fluid properties (e.g., density and viscosity) sometimes requiring different fluid flow rates into the head of the packed bed. Moreover, the surface wetting properties of the mobile phase may also be taken into account when selecting the shape of the anti-jet member 148. Accordingly, including the anti-jet member 148 as a separate, removable component provides a flexible design that may be tailored to particular separations, taking into account characteristics of the sample, the mobile phase, and the type of packing. This flexible design is particularly beneficial for chromatography columns used in laboratory settings and research environments where there is often significant variance in the types of samples, column packing, and mobile phases that are utilized. Finally, the use of the anti-jet member 148 as a separate, removable component is also beneficial because it enables better access to the distribution channels extending through the sample introduction module when cleaning the sample introduction module.

With reference again to FIGS. 3 and 4, in embodiments, the plurality of distribution channels 147 may comprise at least two distribution channels fluidly coupled to the inlet tube adapter 146a (e.g., via the central fluid passageway). In embodiments, the plurality of distribution channels 147 may comprise at least 3 distribution channels, at least 4 distribution channels, at least 5 distribution channels, at least 6 distribution channels, at least 8 distribution channels, at least 10 distribution channels, at least 12 distribution channels, at least 15 distribution channels, or at least 20 distribution channels fluidly coupled to the inlet tube adapter 146a. In embodiments such as the one shown in FIGS. 3 and 4, the plurality of distribution channels 147 may include a branched structure wherein one or more distribution channels fluidly coupled to the inlet tube adapter 146a (i.e., primary distribution channels) branch at least once into at least two channels (i.e., secondary distribution channels) between the inlet tube adapter 146a to the distal end surface 146b of the sample introduction module 146. For example, as shown in the embodiment in FIGS. 3 and 4, each of the distribution channels fluidly coupled to the inlet tube adapter 146a may be a primary distribution channel that branches into separate secondary distribution channels. In embodiments, the diameter of each of the primary distribution channels, secondary distribution channels, tertiary distribution channels, etc. may be designed in view of properties of the mixture to be separated, properties of the mobile phase utilized to carry the mixture, as well as the type of column packing. Moreover, the use of branching and the degree thereof may also be designed in view of the properties of the mixture to be separated, the mobile phase utilized to carry the mixture, as well as the type of column packing.

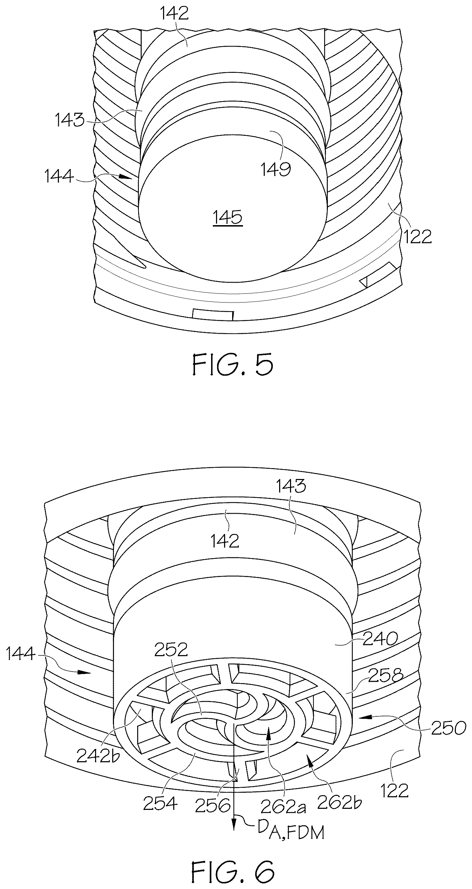

FIG. 5 shows the fluid distribution system 144 with a porous support plate 145 (e.g., a bed support frit or mesh) coupled to the distal end of the fluid distribution system 144. The porous support plate 145 may be any suitable frit or mesh known to those skilled in the art. The material of the porous support plate 145 may be to selected in view different chemical compatibility scenarios in which the chromatography column is utilized. Further, the porosity of the porous support plate 145 may be designed to improve flow conditions for fluid entering the packed bed. In embodiments, the material and/or the porosity of the porous support plate 145 may be designed in view of the design of the fluid distribution system to synergistically improve the flow of fluid into the packed bed, e.g., in terms of the pressure and fluid velocity uniformity across the surface of the packed bed. Moreover, as the porous support plate 145 can become blocked with debris which detrimentally affects the flow of fluid into the head of the packed bed, the porous support plate 145 may be removed and replaced along with the fluid distribution system 144. This allows for an effective and quick way to replace these components as opposed to having to clean them or replace the entire column when contaminating substances pass through the system and contact the interior components.

Referring now to FIGS. 6-8, another embodiment of a fluid distribution system 144 comprises a sample introduction module 240 fluidly connected to the inlet tube 102 via an inlet tube adapter 242a at a proximal side 240-1 of the sample introduction module 240, wherein the inlet tube adapter 242a is configured for fluid connection with the inlet tube 102. The inlet tube adapter 242a may comprise a cylindrical bore configured to receive the end 102-1 of the inlet tube 102 and fluidly connect the inlet tube 102 to a central fluid passageway 242c of the sample introduction module 240. The central fluid passageway 242c extends from the inlet tube adapter 242a to a distal side 240-2 of the sample introduction module 240, wherein the distal side 240-2 of the sample introduction module 240 is opposite the proximal side 240-1 of the sample introduction module 240. In the embodiment shown in FIGS. 6-8, the sample introduction module 240 may include the inlet tube adapter 242a as a projecting portion 243 that defines the cylindrical bore therein. A gripping element 242d (e.g., a gripping ring) may surround the projecting portion 243 of the inlet tube adapter 242a to help secure the end 102-1 of the inlet tube 102 to the sample introduction module 240 and to improve the seal between the outer surface of the inlet tube 102 and the inlet tube adapter 242a. In embodiments, the inlet tube 102 and the sample introduction module 240 may be joined together using an adhesive or by ultrasonic welding. Without wishing to be bound by theory, it is believed that a welded connection between the inlet tube 102 and the sample introduction module 240 may help reduce or eliminate dead volume where sample components are held in a non-flow space thereby leading to "band broadening" caused by these sample components slowly bleeding into the following flow of elution liquid.

The sample introduction module 240 may comprise a distal end surface 242b on the distal side 240-2 of the sample introduction module 240 opposite the inlet tube adapter 242a. The distal end 240-2 of the sample introduction module 240 may be configured to receive a flow distribution module 250, which, like the anti-jet member 148 and sample introduction module 146 described above with respect to the embodiment of the fluid distribution system 144 shown in FIGS. 3 and 4, may be designed to provide a range of optimized flow patterns for different packing types. Moreover, while not required in all embodiments, the flow distribution module 250 as a separate component that is removably coupled to the sample introduction module 240 may provide a flexible design that may be tailored to particular separations, taking into account characteristics of the sample, the mobile phase, and the type of packing. For example, for the embodiment shown in FIGS. 6-8, the fluid distribution module 250 comprises an outer circumferential wall 258 configured to be mounted to a complementary mounting portion of the sample introduction module 240. This flexible design is particularly beneficial for chromatography columns used in laboratory settings and research environments where there is often significant variance in the types of samples, column packing, and mobile phases that are utilized. Further, the use of the flow distribution module 250 as a separate, removable component is also beneficial because it enables improved cleaning of the flow distribution module 250 as well as the sample introduction module 240. However, in embodiments, the sample introduction module 240 and the flow distribution module 250 may be formed as a single component.

In the embodiment shown in FIGS. 6-8, the central fluid passageway 242c extends from the inlet tube adapter 242a through the sample introduction module 240 to a distal side 240-2 of the sample introduction module 240, and terminates at the distal end surface 242b of the sample introduction module 240. However, in embodiments, the sample introduction module 240 may include a plurality of distribution channels as described hereinabove with respect to the sample introduction module 146 depicted in FIGS. 3 and 4. The flow distribution module 250 allows fluid introduced through the inlet endpiece 140 to spread out radially in a controlled and uniform manner, thereby avoiding problematic pressure gradients and flow differential issues which would otherwise disturb the integrity of the composition flow and the uniformity of the disc(s) of the sample bolus. Moreover, it has been found through modeling studies that the flow distribution module described herein helps avoid the formation of radial pressure and/or flow gradients along the length of the column, thereby allowing the flatness of the disc(s) to be maintained as they travel through the column. This leads to improved chromatographic performance relative to existing chromatography columns wherein fluid discs are often converted into inverted bell shapes as they travel through the column.

The flow distribution module 250, positioned on the distal side 240-2 of the sample introduction module 240, may include a plurality of flow distribution arms 252 extending radially outward from an axial center AC_{FDM} of the flow distribution module 250 below where the central fluid passageway 242c terminates at the distal end surface 242b of the sample introduction module 240, as shown in FIGS. 6-8. Each of the flow distribution arms 252 may comprise a fluid distribution arm groove 252a that extends along the flow distribution arm 252 and faces toward (i.e., is open toward) the distal end surface 242b of the sample introduction module 240. The grooves 252a of the flow distribution arms are configured to receive and radially distribute fluid from the central fluid passageway 242c. It has been found that the meeting of the flow distribution arms 252 at the axial center AC_{FDM} prevents liquid from jetting into the resin bed, and that the grooves in the flow distribution arms 252 promote optimized liquid distribution across the bed.

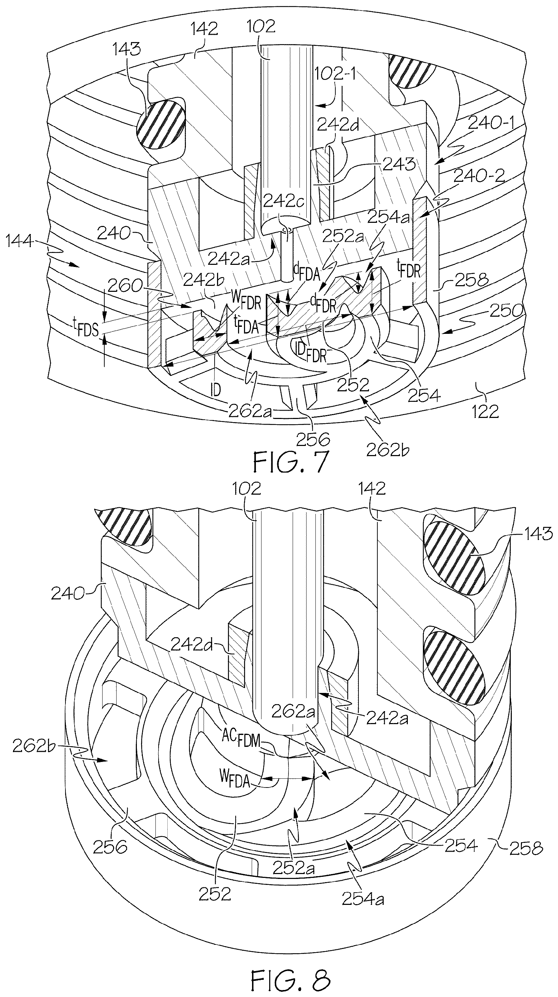

A fluid distribution space 260 (e.g., a disc-shaped void) may be interposed between the distal end surface 242b and tops of the flow distribution arms 252 such that fluid may flow over the tops of the fluid distribution arm grooves 252a and downwards through fluid openings 262 of the flow distribution module 250. In some embodiments, the plurality of flow distribution arms 252 may be separated from the distal end surface 242b of the sample introduction module 240 by 0.2 mm to 60 mm in the axial direction D_{A,FDM} of the flow distribution module 250. In some specific embodiments, the plurality of flow distribution arms 252 may be separated from the distal end surface 242b of the sample introduction module 240 (see t_{FDS} in FIG. 7) by 0.2 mm to 30 mm, 2 mm to 60 mm, 2 mm to 30 mm, 0.2 mm to 50 mm, 0.2 mm to 40 mm, 0.2 mm to 30 mm, 0.2 mm to 20 mm, 0.2 mm to 10 mm, 0.2 mm to 5 mm, 0.2 mm to 3 mm, 0.2 mm to 2 mm, or 0.2 mm to 1 mm.

The number of flow distribution arms 252, the size and shape of the fluid distribution arm grooves 252a therein, and the size and shape of the fluid distribution space 260 that fluidly connects the fluid distribution arm grooves 252a and the fluid openings 262 may be designed in view of the particulars of the chromatographic separation(s) to be performed.

In some embodiments, each groove 252a of the fluid distribution arms 252 may comprise a curved concave surface facing toward the distal end surface 242b of the sample introduction module 240. In some embodiments, the grooves 252a may comprise rectilinear channels.

In some embodiments, the flow distribution arms 252 may have an arm width w_{FDA} from 0.5 mm to 50 mm, such as, for example, from 0.5 mm to 25 mm, from 0.5 mm to 10 mm, from 0.5 mm to 6 mm, from 0.5 mm to 3 mm, from 0.5 mm to 2 mm, or from 0.5 mm to 1 mm.

In some embodiments, the each groove 252a of the plurality of flow distribution arms 252 has a groove depth d_{FDA} from 0.1 mm to 50 mm, such as, for example, from 0.1 mm to 25 mm, from 0.1 mm to 10 mm, from 0.1 mm to 5 mm, from 0.1 mm to 3 mm, from 0.1 mm to 2 mm, from 0.1 mm to 1 mm, from 0.1 mm to 0.7 mm, from 0.1 mm to 0.5 mm, or from 0.3 mm to 0.5 mm.

In the embodiment shown in FIGS. 6-8, flow distribution module 250 includes three flow distribution arms 252. However, in other embodiments, a different number of flow distribution arms 252 may be used, such as, for example In some embodiments, the flow distribution module 250 may comprise from 3 to 48 flow distribution arms 252. In some embodiments, the flow distribution module 250 may comprise from 2 to 8 flow distribution arms 252, such as, for example, 2, 4, 5, 6, 7, or 8 flow distribution arms 252. In some embodiments, the flow distribution module 250 may comprise from 3 to 8 flow distribution arms 252.

In some embodiments, the flow distribution arms 252 may have a straight, radial orientation. However, the fluid distribution arms 252 may also have alternatively have a curved or spiral-like shape (as shown in FIGS. 6-8), e.g., transitioning from a radial orientation at the axial center AC_{FDM} of the flow distribution module 250 to a tangential orientation as the flow distribution arm extends away from the axial center AC_{FDM} of the flow distribution module 250. In some embodiments, the flow distribution arms may have a zig-zag shape. As noted above, the shape of the arms may be designed in view of the particulars of the chromatographic separation(s) to be performed.

In some embodiments, the flow distribution arms 252 may have a thickness t_{FDA} in the axial direction D_{A,FDM} of the flow distribution module 250 from 0.5 mm to 60 mm, such as, for example, from 0.5 mm to 50 mm, from 0.5 mm to 40 mm, from 0.5 mm to 30 mm, from 0.5 mm to 20 mm, from 0.5 mm to 10 mm, from 0.5 mm to 5 mm, from 0.5 mm to 3 mm, from 0.5 mm to 2 mm, or from 0.5 mm to 1 mm.

In embodiments, the flow distribution module 250 may include a flow distribution ring 254 comprising a flow distribution ring groove 254a and extending around the axial center AC_{FDM} of the flow distribution module 250. As shown in FIGS. 6-8, the flow distribution arms 252 may be coupled with the flow distribution ring 254 so as to fluidly connect the fluid distribution arm grooves 252a to the flow distribution ring groove 254a. Further, the flow distribution arms 252 may curve as they extend from the axial center AC_{FDM} of the flow distribution module 250 so as to provide a smooth flow of fluid from the fluid distribution arm grooves 252a to the flow distribution ring groove 254a, as schematically depicted in FIG. 8. The radial distance of the flow distribution ring 254 from the axial center of the flow distribution module 250, as well as the size and shape of the flow distribution ring groove 254a, may be designed in view of the particulars of the chromatographic separation(s) to be performed. In some embodiments, the flow distribution ring 254 has an inner diameter ID_{FDR} between 0.25 × ID to 0.75 × ID, where ID is the inner diameter of the flow distribution module 250 (defined by inner diameter of outer circumferential wall 258). In some embodiments, the fluid distribution module 250 may contain multiple (e.g., 2 to 24, 2 to 12, or 2 to 6) flow distribution rings connected by inter-ring support arms which, together with adjacent flow distribution rings, define additional openings that extend through the flow distribution module 250.

In some embodiments, the flow distribution ring 254 may comprise a width w_{FDR} and thickness t_{FDR} as described hereinabove for the flow distribution arms 252. Further, in some embodiments, the flow distribution ring groove 254a may have a shape and groove depth d_{FDR} as described hereinabove for the fluid distribution arm grooves 252a of the flow distribution arms 252.

The flow distribution ring 254 and the flow distribution arms 252 coupled thereto may be supported by a plurality of support arms 256 that extend radially inwards from the outer circumferential wall 258 of the flow distribution module 250 to the flow distribution ring 254. The number of supports arms 256 may depend on the size of the chromatography column. In some embodiments, the plurality of support arms may include from 4 to 48 support arms, such as, for example, from 4 to 12 support arms or from 4 to 8 support arms.

The fluid openings 262 through the flow distribution module 250 may comprise a plurality of central fluid openings 262a that extend through the flow distribution module 250 in an axial direction D_{A,FDM} and are defined at least in part by edges of adjacent flow distribution arms 252 of the plurality of flow distribution arms 252, and may be further defined by the inner wall of the flow distribution ring 254. The fluid openings 262 may further comprise outer fluid openings 262b that extend through the flow distribution module 250 in an axial direction D_{A,FDM} and are defined by the space between adjacent radial support arms 256, the flow distribution ring 254, and the outer circumferential wall 258. In this manner, fluid may exit the central fluid passageway 242c, contact the a central point where the flow distribution arms 252 meet at the axial center of the flow distribution module 250, flow radially outwards in the fluid distribution arm grooves 252a in a curved or spiral-like manner (e.g., going from a radial orientation to a tangential orientation) to transition into the flow distribution ring groove 254a of the flow distribution ring 254, and flow over the tops of the flow distribution arms 252 and the flow distribution ring 254 and downwards through the central fluid openings 262a and the outer fluid openings 262b into the surface of the packed bed. Moreover, the fluid distribution system 144 shown in FIGS. 6-8 may include a porous support plate 145 (e.g., a bed support frit or mesh) coupled to the distal end of the flow distribution module 250.

Without wishing to be bound by theory, the fluid distribution system 144 of the present disclosure overcomes problems with existing chromatography column fluid distribution systems wherein the sample liquid "jets" out of the endpiece and is unable to spread evenly across the bed surface, thereby creating radial pressure gradients and flow differential issues. These non-uniform flow patterns from the endpiece can result in sub-optimal separation of components of the mixture. The flow distribution module 250 and the combination of the channeled sample introduction module 146 and anti-jet member 148 of the fluid distribution systems 144 described herein prevent the liquid from entering the packed bed as a focused stream and forces the liquid to spread out radially from its central point of introduction. For example, both the flow distribution module 250 and the anti-jet member 148 in conjunction with the plurality of distribution channels of the sample introduction module 146 allow for the sample liquid to spread out radially in a controlled and uniform manner, thereby avoiding problematic pressure gradients and flow differential issues, as well as disturbances to the compositional gradient profile of the elution liquid (e.g., solvents/buffers). In this manner, the chromatography columns of the present disclosure offer improved performance relative to existing chromatography columns with respect to their ability to uniformly introduce the sample liquid and following elution liquid to the bed surface. The designs of the fluid distribution systems described herein were developed by performing detailed modeling studies to tailor the structure of the described fluid distribution systems such that the resolution of the pressure/flow radial gradient achieved by the fluid distribution systems provides for a uniform pressure and fluid velocity across the surface of the packed bed and throughout the length of the packed bed, thereby improving the chromatographic performance.

It should be understood that while described herein with respect to the inlet adapter assembly 120, the fluid distribution systems 144 could also be implemented for a fluid collection system (not shown) of the outlet adapter assembly 130 to allow for uniform exiting of fluid from the reservoir 113 at the outlet end 114b of the main tube assembly 110. At the exit of the packed bed at the outlet end 114b, flat discs travelling through the column are collected and transitioned back into a narrow column of liquid in the outlet tube 104. Without wishing to be bound by theory, it is believed that implementing the fluid distribution systems 144 described herein as fluid collection systems of the outlet adapter assembly 130 may help prevent re-mixing or partial mixing of the separated discs of individual components (sometimes greater than 20, greater than 100, or even greater than 1,000) as they exit the column through much narrower cross-sections than the chromatography column itself. For example, in some applications, the inner diameter of the inlet and outlet tubing is in the range of 0.3 to 0.7 mm, where the inner diameter of the column is in the range of 5 to 10 mm. The fluid distribution systems 144 of the present disclosure, which could also be employed as fluid collection systems, allow for a stable transition of liquid columns entering the column through the inlet tube 102 into flat discs as well as a stable transition of flat discs at the exit of the column back into the liquid columns through the outlet tube 104 for subsequent analysis.

Additionally, the fluid distribution systems of the present disclosure are also designed to minimize potential "dead spaces" in the sample introduction module where sample components may be held in a non-flow space thereby leading to "band broadening" caused by these sample components slowly bleeding into the following flow of elution liquid through, for example, diffusion and mass transport processes. Specifically, the fluid distribution systems described herein are designed to "scour" flow channels through the sample introduction module (and flow distribution module, when implemented) to minimize such dead spaces and avoid smearing of the sample bolus before it reached the packed bed.

Referring again to FIG. 2, chromatography columns of the present disclosure may also include a height-locking mechanism that can be activated at any bed height without inadvertent axial movement of the inlet endpiece 140 into or out of the main tube 111. As described hereinabove, the stationary phase 115 is typically a hydrated packed bed having its bed height and bed compression controlled via adjustment of the axial position of the inlet endpiece 140. However, when setting the bed height via adjustment of the axial position of the inlet endpiece 140, it is important to avoid over compressing the packed bed via inadvertent downward movement of the inlet endpiece 140. It is also important to avoid creating voids above the surface of the packed bed via inadvertent upward movement of the inlet endpiece 140. Such inadvertent disturbances to the packed bed may also result in "channeling" between particles leading to uneven flow in the bed and thereby causing mixing of the separated discs in the packed bed itself. When activated, the height-locking mechanism described herein prevents adjustment of the axial position of the inlet endpiece 140. Accordingly, chromatography columns implementing the height-locking mechanism described herein offer improved performance relative to existing chromatography columns as a result of their ability to avoid both over compression of the packed bed and the creation of voids above the surface of the packed bed.

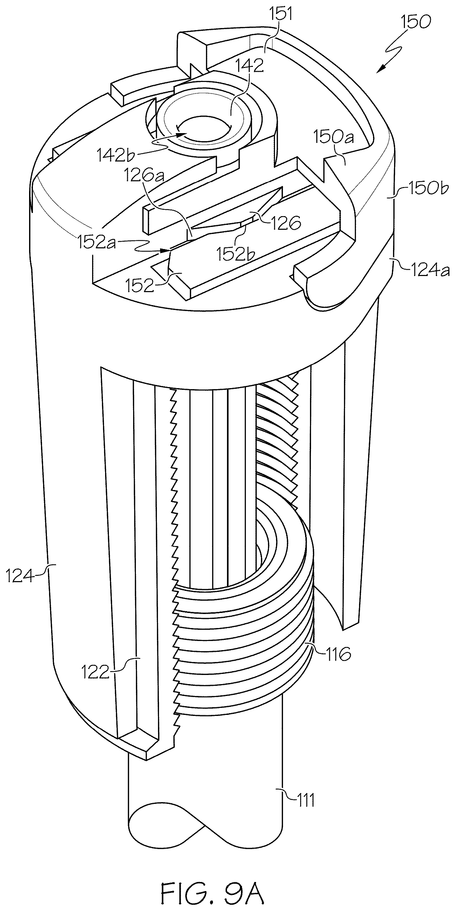

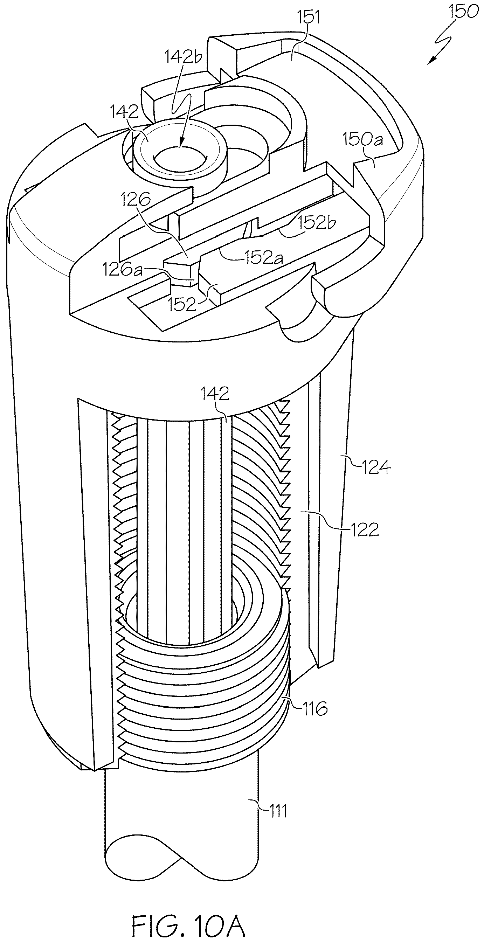

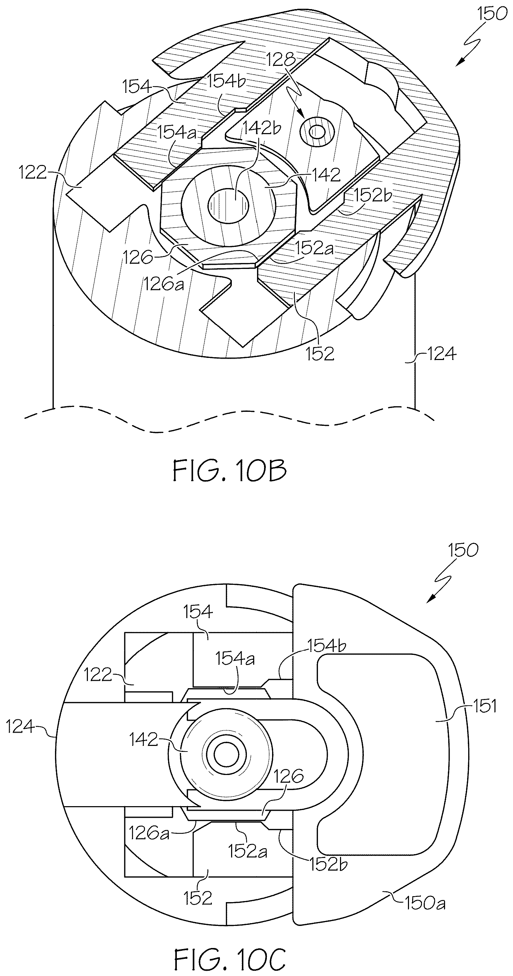

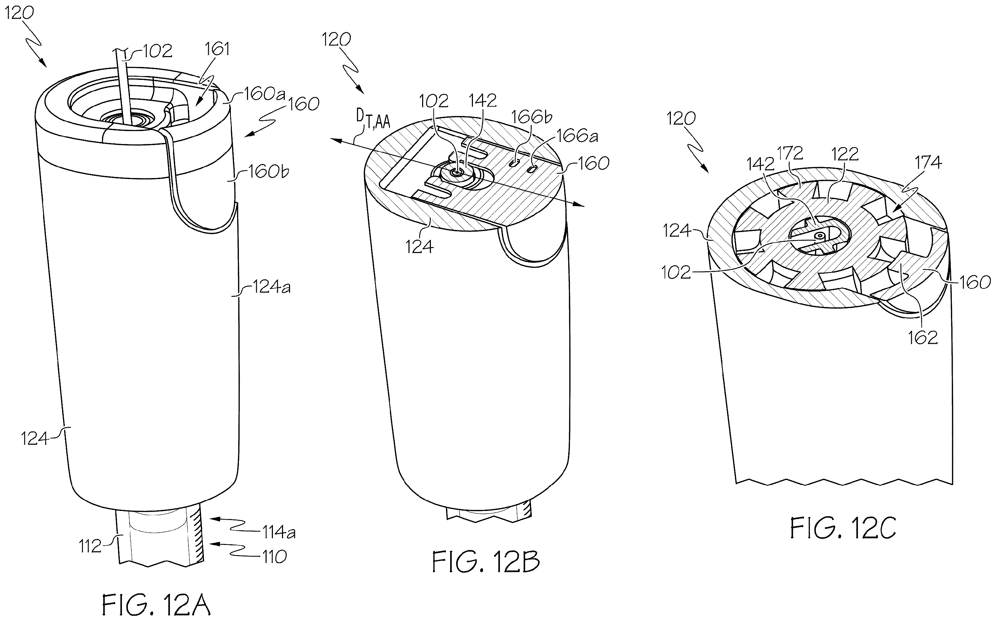

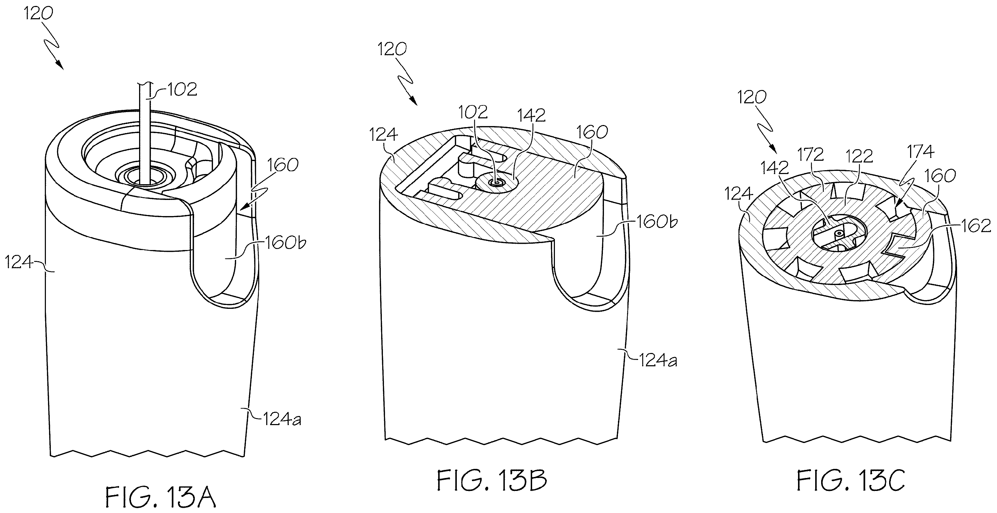

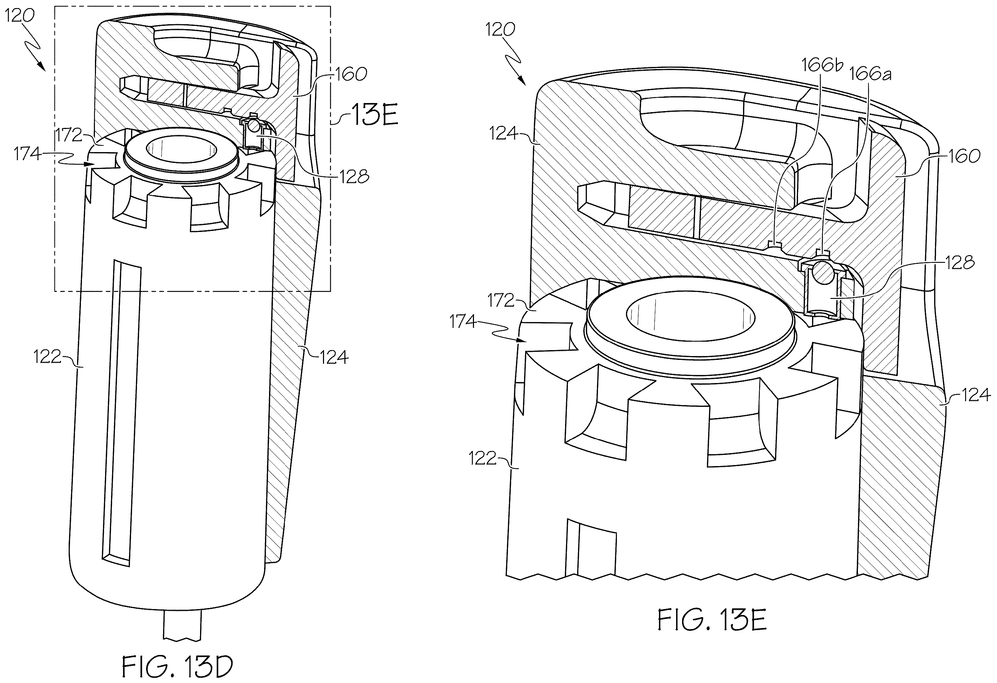

In embodiments, the height-locking mechanism of the inlet adapter assembly 120 includes a translating member 150, 160. In some embodiments, the translating member 150, 160 may axially constrain the outer end cap 124 with respect to the inner end cap 122, as shown in FIG. 2. The translating member 150, 160 may be slidably coupled to the outer end cap 124 to allow movement of the translating member 150, 160 in a transverse direction of the inlet adapter assembly 120 that is perpendicular to an axial direction of the inlet adapter assembly 120, which may be coaxial with the axial direction of the main tube assembly 110 and the central axis A1 of the chromatography column 100. For example, the translating member 150, 160 and the outer end cap 124 may be provided with corresponding structural features that allow for sliding engagement of these components with respect to each other. In embodiments, the translating member 150, 160 may be provided with a grip element, e.g., a recess 151, 161 extending downward from an upper surface 150a, 160a of the translating member 150, 160 and configured to allow a user to adjust the position of the translating member 150, 160 from a radially inward position (see FIGS. 9A-9C and FIGS. 13A-13F) to a radially outward position (see FIGS. 10A-10C and FIGS. 12A-12C).

The translating member 150, 160 may comprise a first locking structure and the inner end cap 122 may comprise a second locking structure, which may be complementary to the first locking structure. When the translating member 150, 160 is in a release position (radially inward position in the embodiment shown in FIGS. 9A-9C), the first locking structure of the translating member 150, 160 is mechanically decoupled from the second locking structure of the inner end cap 122 such that the inner end cap 122 and the outer end cap 124 are rotationally unconstrained with respect to each other and rotation of the outer end cap 124 does not cause axial movement of the inlet endpiece 140 within the main tube 111. Accordingly, when the translating member 150, 160 is in the release position, a user may rotate (e.g., inadvertently) the outer end cap 124 while keeping the inlet endpiece 140 at the same height within the main tube 111, thereby preventing inadvertent adjustment of the compression level of the packed bed (i.e., avoiding inadvertent over compression of the bed as well as the formation of voids above the bed surface).

When the translating member 150, 160 is in an engaged position (radially outward position in the embodiment shown in FIGS. 10A-10C), the first locking structure of the translating member 150, 160 is mechanically coupled with the second locking structure of the inner end cap 122 to rotationally constrain the inner end cap 122 and the outer end cap 124 with respect to each other such that rotation of the outer end cap 124 causes axial movement of the inlet endpiece 140 within the main tube 111. Accordingly, when the translating member 150, 160 is in the engaged position, a user may adjust the axial position of the inlet endpiece 140, and the associated bed height, via rotation of the outer end cap 124. Significantly, in contrast to conventional chromatography columns and height-locking mechanisms, the height-locking mechanism described herein may be activated by mechanically decoupling the first and second locking structures at any bed height without unwanted axial movement of the endpiece into or out of the column.

In some embodiments, the translating member 150 is in the release position when at least a portion of an outer surface 150b of the translating member 150 forms a substantially continuous surface with an adjacent portion of an outer surface 124a of the outer end cap 124 (i.e., to form a substantially continuous profile with a small gap where the translating member 150 meets the outer end cap 124). In some embodiments, the translating member 150 is in the engaged position when the at least a portion of the outer surface 150b of the translating member 150, 160 is offset in the transverse direction D_{T,AA} from the adjacent portion of the outer surface 124a of the outer end cap 124.

In some embodiments, a spring plunger 128 (e.g., ball or pin type) may be mounted to the outer end cap 124 adjacent to the translating member 150, 160 and the translating member 150, 160 may comprise an outer notch 156a, 166a and an inner notch 156b, 166b. The translating member 150, 160 may be maintained in the release position via engagement between the spring plunger 128 and one of the inner notch 156b, 166b or the outer notch 156a, 166a, and the translating member 150, 160 is maintained in the engaged position via engagement between the spring plunger 128 and the other of the inner notch 156b, 166b or the outer notch 156a, 166a. In other embodiments, a spring plunger may be mounted to the translating member 150 and configured to engage with inner and outer notches of the outer end cap 124 so as to maintain the translating member 150 in the engaged and release positions. The translating member (150) may be moved from the release position to the locking position via application of a transverse force in the corresponding direction that exceeds a threshold transverse force associated with the spring plunger 128.

Referring again to FIGS. 9A-10C, in some embodiments, the first locking structure of the translating member 150 may comprises at least one locking arm 152, 154 that extends in the transverse direction D_{T,AA} adjacent to the inlet endpiece 140, wherein the each locking arm 152, 154 of the at least on locking arm 152, 154 comprises a locking surface 152a, 154a that faces toward the inlet endpiece 140 in a direction perpendicular to both the axial direction D_{A,AA} and the transverse direction D_{T,AA}, and a recess 151 that faces toward the inlet endpiece 140 in the direction perpendicular to both the axial direction D_{A,AA} and the transverse direction D_{T,AA}. The second locking structure of the inner end cap 122 may comprise an upward protrusion 126 at a proximal end 122-1 of the inner end cap 122, the upward protrusion 126 comprising a plurality of radially outward facing surfaces 126a.

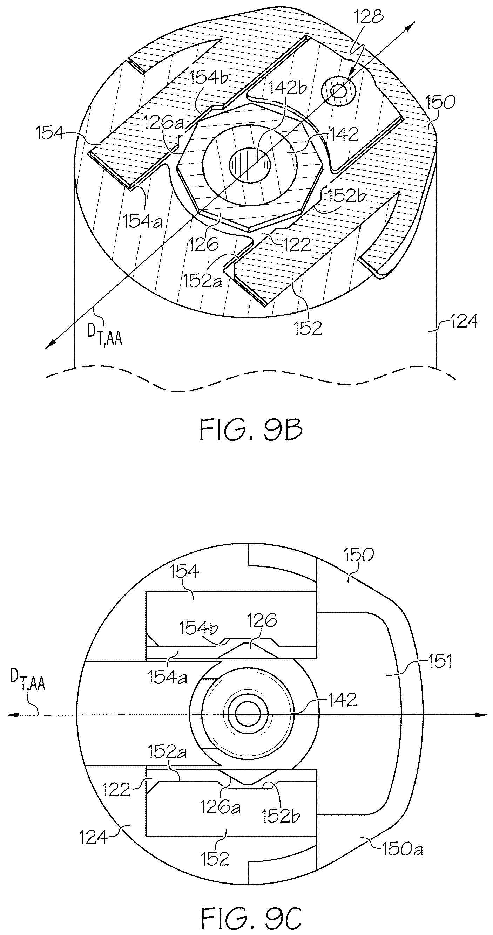

Referring to the embodiment shown in FIGS. 9A-9C, when the translating member 150 is in the release position, the recess 151 is radially adjacent to the upward protrusion 126 and the outer end cap 124 is able to rotate about the axial direction of the adapter assembly 120 without causing contact between the at least one locking arm 152, 154 and the upward protrusion 126. For example, as more clearly seen in FIGS. 9B and 9C, vertical edges connecting adjacent outward facing surfaces 126a of the upward protrusion 126 may enter the recess 152b, 154b without contacting the surfaces defining the recess 152b, 154b or other portions of the locking arm 152, 154. By aligning the locking surface 152a, 154a with a radially outward facing surface 126a of the upward protrusion, the translating member 150 may then be moved radially outward into the engaged position wherein the locking arm 152, 154 is mechanically coupled with the upward protrusion 126 of the inner end cap 122, as discussed in more detail below.

Referring now to the FIGS. 10A to 10C, in this embodiment, when the translating member 150 is in the engaged position, the locking surface 152a, 154a is radially adjacent to the upward protrusion 126 such that contact between the locking surface 152a, 154a and one of the plurality of radially outward facing surfaces 126a of the upward protrusion 126 causes the inner end cap 122 and the outer end cap 124 to be rotationally constrained with respect to each other. Specifically, when a user rotates the outer end cap 124 relative to the main tube assembly 110, the translating member 150 is subject to the same rotation as the outer end cap 124, and the inner end cap 122, mechanically coupled with the translating member 150, is also subject to same rotation. Moreover, due to the threaded engagement between the inner end cap 122 and the inlet end 114a of the main tube assembly 110, and further due to the axial constrained inlet endpiece 140 relative to the inner end cap 122, this rotation of the inner end cap 122 effects an axial movement of the inlet endpiece 140 thereby allowing the user to adjust the bed height of the chromatography column 100. Once the desired bed height is achieved, the user may move the translating member 150 from the radially outward, engaged position shown in FIGS. 10A-10C to the radially inward, release position shown in FIGS. 9A-9C, thereby activating the height-locking mechanism and preventing further adjustments to the axial position of the bed height.

In some embodiments, the plurality of radially outward facing surfaces 126a of the upward protrusion may comprise 4, 6, 8, or 10 radially outward facing surfaces 126a.

In some embodiments, the at least one locking arm comprises a first locking arm 152 and a second locking arm 154 positioned on an opposite side of the inlet endpiece 140 relative to the first locking arm 152. The first locking arm 152 may comprise a first locking surface 152a and first recess 152b both of which face toward the inlet endpiece 140 in the direction perpendicular to both the axial direction D_{A,AA} and the transverse direction D_{T,AA}. The second locking arm 154 may comprise a second locking surface 154a and second recess 154b both of which face toward the inlet endpiece 140 in the direction perpendicular to both the axial direction and the transverse direction. When the translating member 150 is in the release position, the first recess 152b and the second recess 154b are radially adjacent to the upward protrusion 126 on opposite sides of the upward protrusion 126 and the outer end cap 124 is able to rotate about the axial direction of the adapter assembly 120, 130 without causing contact between the first locking arm 152 or the second locking arm 154 and the upward protrusion 126. When the translating member 150 is in the engaged position, the first locking surface 152a and second locking surface 154a are radially adjacent to the upward protrusion 126 on opposite sides of the upward protrusion 126 such that contact between the first locking surface 152a and the second locking surface 154a with oppositely facing surfaces of the plurality of radially outward facing surfaces 126a of the upward protrusion 126 causes the inner end cap 122 and the outer end cap 124 to be rotationally constrained with respect to each other.

In the embodiment depicted in FIGS. 9A-10C, the translating member 150 may be maintained in the release position via engagement between the spring plunger 128 and the outer notch 156a and maintained in the engaged position via engagement between the spring plunger 128 and the inner notch 156b.

In some embodiments, the inner end cap 122 may be provided with a plurality of inner alignment indicators 122b on an outer surface 125 (see FIG. 1) of the inner end cap 122 which, when aligned with an outer alignment indicator 124b of the outer end cap 124, indicate that the first locking surface 152a is parallel with one of plurality of radially outward facing surfaces 126a of the upward protrusion 126 and that the translating member 150 is movable in the transverse direction to transition from the release position to the engaged position. For example, with respect to the embodiment shown in FIG. 1, an exposed portion of the inner end cap 122 may be provided with the plurality of inner alignment indicators 122b which, when aligned with an outer alignment indicator 124b of the outer end cap 124, indicate that the first locking surface 152a is parallel with one of plurality of radially outward facing surfaces 126a of the upward protrusion 126.

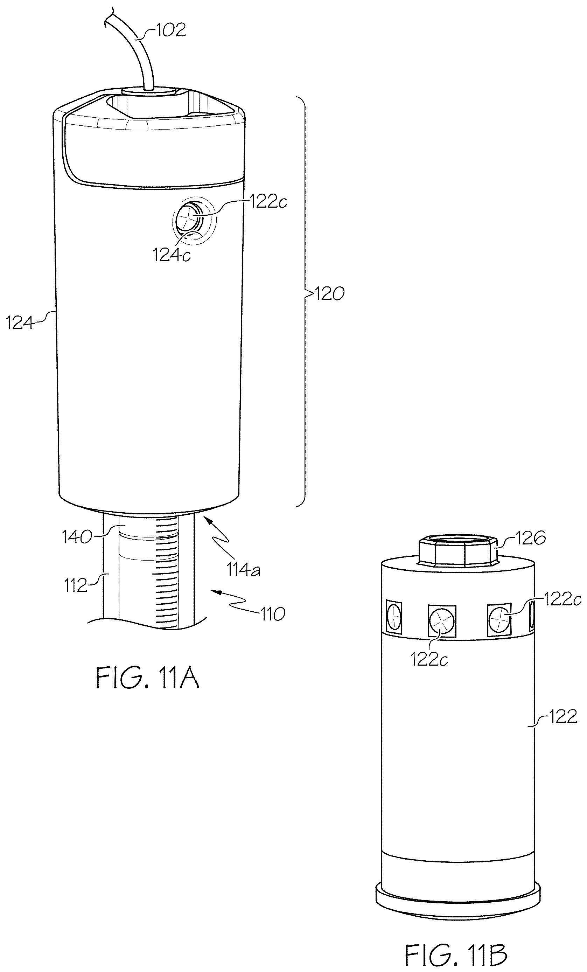

Referring now to FIGS. 11A and 11B, in some embodiments, the inner end cap 122 may be provided with a plurality of inner alignment indicators 122c that are obscured from view except when aligned with a corresponding outer alignment indicator 124c of the outer end cap 124. The plurality of inner alignment indicators 122c and the outer alignment indicator 124c are positioned on the inner end cap 122 and the outer end cap 124, respectively, such as to be at the same axial position of the inlet adapter assembly 120. The outer alignment indicator 124c is configured to allow visibility of the inner end cap 122, particularly, the inner alignment indicators 122c of the inner end cap 122 as the outer end cap 124 rotates relative to the inner end cap 122. In the embodiment depicted in FIGS. 11A and 11B, the outer alignment indicator 124c is a circular hole through the wall of the outer end cap 124 and the inner alignment indicators 122c are circular markers on the inner end cap 122. However, it should be understood that the outer alignment indicator 124c and the inner alignment indicators 122c may be any suitable shape.

Referring not to the embodiment shown in FIGS. 12A-13E, the inlet adapter assembly 120 of the present disclosure may comprise a translating member 160 that, in contrast to the embodiment shown in FIGS. 9A-10C, is in the engaged position when the translating member 160 is in a radially inward position and the release position when the translating member 160 is in a radially outward position. In such embodiments, the first locking structure of the translating member 160 may comprise a locking protrusion 162 that extends in the transverse direction toward the inlet endpiece 140, and the second locking structure of the inner end cap 122 may comprise a plurality of teeth 172 at the proximal end 122-1 of the inner end cap 122 and a plurality of radially outward facing cavities 174 defined by a circumferentially adjacent teeth 172, as shown in FIGS. 12C and 13C.

Referring now to FIGS. 12A-12C, when the translating member 160 is in the release position (radially outward), the outer end cap 124 is able to rotate about the axial direction of the inlet adapter assembly 120 without causing contact between the locking protrusion 162 and the plurality of teeth 172. Accordingly, rotation of the outer end cap 124 will not cause a corresponding rotation of the inner end cap 122, thereby maintaining the axial position of the inlet endpiece 140 despite rotation of the outer end cap 124. By aligning the locking protrusion with one of the plurality of radially outward facing cavities 174, the translating member 160 may then be moved radially inward into the engaged position wherein the locking protrusion is mechanically coupled with the teeth 172 of the inner end cap 122, as discussed in more detail below.

Referring now to FIGS. 13A-13C, when the translating member 160 is in the engaged position, the locking protrusion 162) is received within one of the plurality of cavities 174 such that the inner end cap 122 and the outer end cap 124 are rotationally constrained with respect to each other. Thus, when a user rotates the outer end cap 124 relative to the main tube assembly 110, the translating member 160 is subject to the same rotation as the outer end cap 124, and the inner end cap 122, mechanically coupled with the translating member 160, is also subject to same rotation. Moreover, due to the threaded engagement between the inner end cap 122 and the inlet end 114a of the main tube assembly 110, and further due to the axial constrained inlet endpiece 140 relative to the inner end cap 122, this rotation of the inner end cap 122 effects an axial movement of the inlet endpiece 140 thereby allowing the user to adjust the bed height of the chromatography column 100. Once the desired bed height is achieved, the user may move the translating member 160 from the radially inward, engaged position shown in FIGS. 13A-13E to the radially outward, release position shown in FIGS. 12A-12C, thereby activating the height-locking mechanism and preventing further adjustments to the axial position of the bed height.

In some embodiments, the plurality of teeth 172 may comprise from 3 to 12 teeth, such as, for example, 7 teeth as shown for the embodiment depicted in FIGS. 12A-13E. However, in larger columns, the plurality of teeth 172 may include 100 teeth or more. Moreover, in the embodiment depicted in FIGS. 12A-13E, the translating member 160 may be maintained in the release position via engagement between the spring plunger 128 and the inner notch 156b and maintained in the engaged position via engagement between the spring plunger 128 and the outer notch 156a.

It should be understood that the description herein with respect to the inlet adapter assembly 120 and the height-locking mechanism could also be for the outlet adapter assembly 130 to prevent inadvertent axial movement of the outlet endpiece 132 into and out of the main tube 111. Accordingly, the outlet adapter assembly 130 may comprise substantially the same design features as the inlet adapter assembly 120, having an outlet endpiece similar to the inlet endpiece and inner and outer end caps similar to the inner and outer end caps 122, 124 of the inlet adapter assembly 120.

Without wishing to be bound by theory, it is believed the chromatography columns described herein having both the fluid distribution system 144 and the height-locking mechanism described herein may significantly improve the quality of chromatographic separations by allowing for precise and stable control of the bed height, thereby avoiding voids and/or over-compressed regions at the surface and within the packed bed, while also achieving a uniform distribution of fluid at the bed surface. While these features separately improve the performance of the chromatography column, their use in combination is believed to synergistically benefit the introduction of fluid into the chromatography column. For example, the absence of voids and/or over-compressed regions in the packed bed, as well as the avoidance of "channeling" between particles which may result from such voids and over-compressed regions, may reduce the mixing of flat discs that are created using the fluid distribution systems described herein. That is, the fluid distribution systems of the present disclosure allow for stable conversion of liquid columns in the inlet tube into flat discs for entering the packed bed, and the controlled bed height achieved by the height-locking mechanism helps to maintain the flatness of these discs as they travel through the packed bed.

According to a first aspect of the present disclosure, a fluid distribution system comprises: a sample introduction module comprising: an inlet tube adapter at a proximal side of the sample introduction module, wherein the inlet tube adapter is configured for fluidic connection with an inlet tube; and a central fluid passageway extending from the inlet tube adapter to a distal side of the sample introduction module; and a flow distribution module positioned on the distal side of the sample introduction module, the flow distribution module comprising: a plurality of flow distribution arms extending radially outward from an axial center of the flow distribution module, wherein each flow distribution arm comprises a groove that extends along the flow distribution arm and faces toward a distal end surface of the sample introduction module; and a plurality of central openings that extend through the flow distribution module in an axial direction of the flow distribution module, wherein each central opening of the plurality of central openings is defined at least in part by edges of adjacent flow distribution arms of the plurality of flow distribution arms.

A second aspect includes the first aspect, wherein the fluid distribution module is removably coupled to the sample introduction module.

A third aspect includes the second aspect, wherein the fluid distribution module comprises an outer circumferential wall configured to be mounted to a complementary mounting portion of the sample introduction module.

A fourth aspect includes the first aspect, wherein the sample introduction module and the fluid distribution module are formed as a single component.

A fifth aspect includes any one of the first through fourth aspects, herein each groove of the flow distribution arms comprises a curved concave surface facing toward the distal end surface of the sample introduction module.

A sixth aspect includes any one of the first through fifth aspects, wherein each flow distribution arm of the plurality of flow distribution arms has an arm width from 0.5 mm to 50 mm.

A seventh aspect includes any one of the first through fifth aspects, wherein each flow distribution arm of the plurality of flow distribution arms has an arm width from 0.5 mm to 1 mm.

An eighth aspect includes any one of the first through seventh aspects, wherein each groove of the plurality of flow distribution arms has a groove depth from 0.1 mm to 50 mm.

A ninth aspect includes any one of the first through seventh aspects, wherein each groove of the plurality of flow distribution arms has a groove depth from 0.1 mm to 1 mm.

A tenth aspect includes any one of the first through ninth aspects, wherein the plurality of flow distribution arms comprises from 3 to 48 flow distribution arms.

An eleventh aspect includes any one of the first through ninth aspects, wherein the plurality of flow distribution arms comprises from 3 to 8 flow distribution arms.

A twelfth aspect includes any one of the first through eleventh aspects, wherein each flow distribution arm is curved such that the flow distribution arm transitions from a radial orientation at the axial center of the flow distribution module to a tangential orientation as the flow distribution arm extends away from the axial center.

A thirteenth aspect includes any one of the first through twelfth aspects, wherein the plurality of flow distribution arms have a thickness in the axial direction of the flow distribution module of from 0.5 mm to 60 mm.

A fourteenth aspect includes any one of the first through twelfth aspects, wherein the plurality of flow distribution arms have a thickness in the axial direction of the flow distribution module of from 0.5 mm to 3 mm.

A fifteenth aspect includes any one of the first through fourteenth aspects, wherein the plurality of flow distribution arms are separated from the distal end surface of the sample introduction module by 0.2 mm to 30 mm in the axial direction of the flow distribution module.

A sixteenth aspect includes any one of the first through fourteenth aspects, wherein the plurality of flow distribution arms are separated from the distal end surface of the sample introduction module by 0.2 mm to 1 mm in the axial direction of the flow distribution module.

A seventeenth aspect includes any one of the first through sixteenth aspects, wherein: the flow distribution module further comprises a flow distribution ring that comprises a ring groove and extends around the axial center of the flow distribution module; and the flow distribution arms are coupled to the flow distribution ring to fluidly connect the grooves of the flow distribution arms with the ring groove of the flow distribution ring.

An eighteenth aspect includes the seventeenth aspect, wherein each flow distribution arm is curved such that the flow distribution arm transitions from having a radial orientation at the axial center of the flow distribution module to a tangential orientation where the flow distribution arms are coupled to the flow distribution ring.

A nineteenth aspect includes either one of the seventeenth or eighteenth aspects, wherein the flow distribution ring has an inner diameter ID_{FDR} between 0.25 × ID to 0.75 × ID, where ID is an inner diameter of the flow distribution module.

A twentieth aspect includes any one of the seventeenth through nineteenth aspects, wherein: the flow distribution ring and the plurality of flow distribution arms coupled thereto are supported by a plurality of support arms that extend radially inward from an outer circumferential wall of the flow distribution module and are connected to the flow distribution ring; and a plurality of outer fluid openings extend through the flow distribution module in an axial direction of the flow distribution module, wherein each of the outer fluid openings are defined by the outer circumferential wall, an outer surface of the flow distribution ring, and adjacent support arms of the plurality of support arms.

A twenty-first aspect includes the twentieth aspect, wherein the plurality of support arms comprises from 4 to 48 support arms.

According to a twenty-second aspect of the present disclosure, a chromatography column comprises: a main tube assembly comprising: an inlet end; an outlet end opposite the inlet end along an axial direction of the main tube assembly; and a main tube extending between the inlet end and the outlet end; an inlet adapter assembly coupled to the inlet end of the main tube assembly, the inlet adapter assembly comprising an inlet endpiece comprising an elongated stem with a bore extending longitudinally through the elongated stem, wherein a distal end of the elongated stem is inserted into the main tube at the inlet end of the main tube assembly; an inlet tube extending through the bore of the elongated stem from a proximal end of the elongated stem to the distal end of the elongated stem; and the fluid distribution system of any one of the first through twenty-first aspects coupled to the distal end of the elongated stem, wherein the inlet tube adapter is fluidically connected to the inlet tube.

A twenty-third aspect includes the twenty-second aspect, wherein the inlet adapter assembly further comprises: an inner end cap comprising a sidewall having a threaded surface configured for threaded engagement with an end of a main tube assembly of the chromatography column, wherein the inlet endpiece is axially constrained with respect to the inner end cap such that rotation of the inner end cap causes axial movement of the inlet endpiece within the main tube of the main tube assembly; an outer end cap coupled to the inner end cap, wherein the outer end cap surrounds the inner end cap and is axially constrained with respect to the inner end cap; and a translating member slidably coupled to the outer end cap to allow movement of the translating member in a transverse direction of the adapter assembly that is perpendicular to an axial direction of the adapter assembly, wherein: the translating member comprises a first locking structure; the inner end cap comprises a second locking structure; when the translating member is in an engaged position, the first locking structure of the translating member is mechanically coupled with the second locking structure of the inner end cap to rotationally constrain the inner end cap and the outer end cap with respect to each other such that rotation of the outer end cap causes axial movement of the inlet endpiece within the main tube; and when the translating member is in a release position, the first locking structure of the translating member is mechanically decoupled from the second locking structure of the inner end cap such that the inner end cap and the outer end cap are rotationally unconstrained with respect to each other and rotation of the outer end cap does not cause axial movement of the inlet endpiece within the main tube.

A twenty-fourth aspect includes the twenty-third aspect, wherein the translating member is in the release position when at least a portion of an outer surface of the translating member forms a substantially continuous surface with an adjacent portion of an outer surface of the outer end cap.

A twenty-fifth aspect includes the twenty-fourth aspect, wherein the translating member is in the engaged position when the at least a portion of the outer surface of the translating member is offset in the transverse direction from the adjacent portion of the outer surface of the outer end cap.

A twenty-sixth aspect includes any one of the twenty-third through twenty-fifth aspects, wherein: a spring plunger is mounted to the outer end cap adjacent to the translating member; the translating member comprises an outer notch and an inner notch; the translating member is maintained in the release position via engagement between the spring plunger and one of the inner notch or the outer notch; and the translating member is maintained in the engaged position via engagement between the spring plunger and the other of the inner notch or the outer notch.

A twenty-seventh aspect includes any one of the twenty-third through twenty-fifth aspects, wherein: the first locking structure comprises at least one locking arm that extends in the transverse direction adjacent to the inlet endpiece, wherein the each locking arm of the at least on locking arm comprises: a locking surface that faces toward the inlet endpiece in a direction perpendicular to both the axial direction and the transverse direction; and a recess that faces toward the inlet endpiece in the direction perpendicular to both the axial direction and the transverse direction; the second locking structure comprises an upward protrusion at a proximal end of the inner end cap, the upward protrusion comprising a plurality of radially outward facing surfaces; when the translating member is in the release position, the recess is radially adjacent to the upward protrusion and the outer end cap is able to rotate about the axial direction of the adapter assembly without causing contact between the at least one locking arm and the upward protrusion; and when the translating member is in the engaged position, the locking surface is radially adjacent to the upward protrusion such that contact between the locking surface and one of the plurality of radially outward facing surfaces of the upward protrusion causes the inner end cap and the outer end cap to be rotationally constrained with respect to each other.

A twenty-eighth aspect includes the twenty-seventh aspect, wherein the plurality of radially outward facing surfaces comprises 4, 6, 8, or 10 radially outward facing surfaces.

A twenty-ninth aspect includes either one of the twenty-seventh or twenty-eighth aspects, wherein: the at least one locking arm comprises a first locking arm and a second locking arm positioned on an opposite side of the inlet endpiece relative to the first locking arm, wherein: the first locking arm comprises: a first locking surface that faces toward the inlet endpiece in the direction perpendicular to both the axial direction and the transverse direction; and a first recess that faces toward the inlet endpiece in the direction perpendicular to both the axial direction and the transverse direction; the second locking arm comprises: a second locking surface that faces toward the inlet endpiece in the direction perpendicular to both the axial direction and the transverse direction; and a second recess that faces toward the inlet endpiece in the direction perpendicular to both the axial direction and the transverse direction; when the translating member is in the release position, the first recess and the second recess are radially adjacent to the upward protrusion on opposite sides of the upward protrusion and the outer end cap is able to rotate about the axial direction of the adapter assembly without causing contact between the first locking arm or the second locking arm and the upward protrusion; and when the translating member is in the engaged position, the first locking surface and second locking surface are radially adjacent to the upward protrusion on opposite sides of the upward protrusion such that contact between the first locking surface and the second locking surface with oppositely facing surfaces of the plurality of radially outward facing surfaces of the upward protrusion causes the inner end cap and the outer end cap to be rotationally constrained with respect to each other.

A thirtieth aspect includes any one of the twenty-seventh through twenty-ninth aspects, wherein: a spring plunger is mounted to the outer end cap adjacent to the translating member; the translating member comprises an inner notch and an outer notch; the translating member is maintained in the release position via engagement between the spring plunger and the outer notch; and the translating member is maintained in the engaged position via engagement between the spring plunger and the inner notch.

A thirty-first aspect includes any one of the twenty-third through twenty-fifth aspects, wherein: the first locking structure comprises a locking protrusion that extends in the transverse direction toward to the inlet endpiece; the second locking structure comprises: a plurality of teeth at the proximal end of the inner end cap; and a plurality of radially outward facing cavities defined by a circumferentially adjacent teeth; when the translating member is in the release position, the outer end cap is able to rotate about the axial direction of the adapter assembly without causing contact between the locking protrusion and the plurality of teeth; and when the translating member is in the engaged position, the locking protrusion is received within one of the plurality of cavities such that the inner end cap and the outer end cap are rotationally constrained with respect to each other.

A thirty-second aspect includes the thirty-first aspect, wherein the plurality of teeth comprises from 3 to 12 teeth.

A thirty-third aspect includes either one of the thirty-first or thirty-second aspects, wherein: a spring plunger is mounted to the outer end cap adjacent to the translating member; the translating member comprises an inner notch and an outer notch; the translating member is maintained in the release position via engagement between the spring plunger and the inner notch; and the translating member is maintained in the engaged position via engagement between the spring plunger and the outer notch.

Reference throughout this specification to "one embodiment," "certain embodiments," "various embodiments," "one or more embodiments" or "an embodiment" means that a particular feature, structure, material, or characteristic described in connection with the embodiment is included in at least one embodiment of the disclosure. Thus, the appearances of the phrases such as "in one or more embodiments," "in certain embodiments," "in embodiments," "in various embodiments," "in some embodiments," "in one embodiment," or "in an embodiment" in various places throughout this specification are not necessarily referring to the same embodiment, or to only one embodiment. Furthermore, the particular features, structures, materials, or characteristics may be combined in any suitable manner in one or more embodiments.

It is also understood that, unless otherwise specified, terms such as "top," "bottom," "outward," "inward," and the like are words of convenience and are not to be construed as limiting terms. In addition, whenever a group is described as comprising at least one of a group of elements and combinations thereof, it is understood that the group may comprise, consist essentially of, or consist of any number of those elements recited, either individually or in combination with each other. Similarly, whenever a group is described as consisting of at least one of a group of elements or combinations thereof, it is understood that the group may consist of any number of those elements recited, either individually or in combination with each other. Unless otherwise specified, a range of values, when recited, includes both the upper and lower limits of the range as well as any ranges therebetween.

As used herein, the indefinite articles "a," "an," and the corresponding definite article "the" mean "at least one" or "one or more," unless otherwise specified. It also is understood that the various features disclosed in the specification and the drawings can be used in any and all combinations.

It is noted that the terms "substantially" and "about" may be utilized herein to represent the inherent degree of uncertainty that may be attributed to any quantitative comparison, value, measurement, or other representation. These terms are also utilized herein to represent the degree by which a quantitative representation may vary from a stated reference without resulting in a change in the basic function of the subject matter at issue.

It is noted that recitations herein of a component of the present disclosure being "configured" in a particular way, to embody a particular property, or to function in a particular manner, are structural recitations, as opposed to recitations of intended use. More specifically, the references herein to the manner in which a component is "configured" denotes an existing physical condition of the component and, as such, is to be taken as a definite recitation of the structural characteristics of the component.

Having described the subject matter of the present disclosure in detail and by reference to specific embodiments thereof, it is noted that the various details disclosed herein should not be taken to imply that these details relate to elements that are essential components of the various embodiments described herein, even in cases where a particular element is illustrated in each of the drawings that accompany the present description. Further, it will be apparent that modifications and variations are possible without departing from the scope of the present disclosure.

## Claims

1. A fluid distribution system (144), the fluid distribution system (144) comprising:
a sample introduction module (240) comprising:
an inlet tube adapter (242a) at a proximal side (240-1) of the sample introduction module (240), wherein the inlet tube adapter (242a) is configured for fluidic connection with an inlet tube (102); and
a central fluid passageway (242c) extending from the inlet tube adapter (242a) to a distal side (240-2) of the sample introduction module (240); and
a flow distribution module (250) positioned on the distal side (240-2) of the sample introduction module (240), the flow distribution module (250) comprising:
a plurality of flow distribution arms (252) extending radially outward from an axial center of the flow distribution module (250), wherein each flow distribution arm (252) comprises a groove (252a) that extends along the flow distribution arm (252) and faces toward a distal end surface (242b) of the sample introduction module (240); and
a plurality of central openings that extend through the flow distribution module (250) in an axial direction of the flow distribution module (250), wherein each central opening of the plurality of central openings is defined at least in part by edges of adjacent flow distribution arms (252) of the plurality of flow distribution arms (252).

2. The fluid distribution system (144) of claim 1, wherein the fluid distribution module (250) is removably coupled to the sample introduction module (240).

3. The fluid distribution system (144) of claim 2, wherein the fluid distribution module (250) comprises an outer circumferential wall (258) configured to be mounted to a complementary mounting portion of the sample introduction module (240).

4. The fluid distribution system (144) of claim 1, wherein the sample introduction module (240) and the fluid distribution module (250) are formed as a single component.

5. The fluid distribution system (144) of any one of claims 1 to 4, wherein each groove (252a) of the flow distribution arms (252) comprises a curved concave surface facing toward the distal end surface (242b) of the sample introduction module (240).

6. The fluid distribution system (144) of any one of claims 1 to 5, wherein each flow distribution arm (252) of the plurality of flow distribution arms (252) has an arm width from 0.5 mm to 50 mm.

7. The fluid distribution system (144) of any one of claims 1 to 6, wherein each groove (252a) of the plurality of flow distribution arms (252) has a groove (252a) depth from 0.1 mm to 50 mm.

8. The fluid distribution system (144) of any one of claims 1 to 7, wherein each flow distribution arm (252) is curved such that the flow distribution arm (252) transitions from a radial orientation at the axial center of the flow distribution module (250) to a tangential orientation as the flow distribution arm (252) extends away from the axial center.

9. The fluid distribution system (144) of any one of claims 1 to 8, wherein the plurality of flow distribution arms (252) have a thickness in the axial direction of the flow distribution module (250) of from 0.5 mm to 60 mm.

10. The fluid distribution system (144) of any one of claims 1 to 9, wherein the plurality of flow distribution arms (252) are separated from the distal end surface (242b) of the sample introduction module (240) by 0.2 mm to 30 mm in the axial direction of the flow distribution module (250).

11. The fluid distribution system (144) of any one of claims 1 to 10, wherein:
the flow distribution module (250) further comprises a flow distribution ring (254) that comprises a ring groove (254a) and extends around the axial center of the flow distribution module (250); and
the flow distribution arms (252) are coupled to the flow distribution ring (254) to fluidly connect the grooves (252a) of the flow distribution arms (252) with the ring groove (254a) of the flow distribution ring (254).

12. The fluid distribution system (144) of claim 11, wherein each flow distribution arm (252) is curved such that the flow distribution arm (252) transitions from having a radial orientation at the axial center of the flow distribution module (250) to a tangential orientation where the flow distribution arms (252) are coupled to the flow distribution ring (254).

13. The fluid distribution system (144) of either one of claims 11 or 12, wherein the flow distribution ring (254) has an inner diameter ID_{FDR} between 0.25 × ID to 0.75 × ID, where ID is an inner diameter of the flow distribution module (250).

14. The fluid distribution system (144) of any one of claims 11 to 13, wherein:
the flow distribution ring (254) and the plurality of flow distribution arms (252) coupled thereto are supported by a plurality of support arms (256) that extend radially inward from an outer circumferential wall (258) of the flow distribution module (250) and are connected to the flow distribution ring (254); and
a plurality of outer fluid openings (262b) extend through the flow distribution module (250) in an axial direction of the flow distribution module (250), wherein each of the outer fluid openings (262b) are defined by the outer circumferential wall (258), an outer surface of the flow distribution ring (254), and adjacent support arms (256) of the plurality of support arms (256).

15. A chromatography column (100) comprising:
a main tube assembly (110) comprising:
an inlet end (114a);
an outlet end (114b) opposite the inlet end (114a) along an axial direction of the main tube assembly (110); and
a main tube (111) extending between the inlet end (114a) and the outlet end (114b);
an inlet adapter assembly (120) coupled to the inlet end (114a) of the main tube assembly (110), the inlet adapter assembly (120) comprising an inlet endpiece (140) comprising an elongated stem (142) with a bore (142b) extending longitudinally through the elongated stem (142), wherein a distal end (142-2) of the elongated stem (142) is inserted into the main tube (111) at the inlet end (114a) of the main tube assembly (110);
an inlet tube (102) extending through the bore (142b) of the elongated stem (142) from a proximal end (142-1) of the elongated stem (142) to the distal end (142-2) of the elongated stem (142); and
the fluid distribution system (144) of any one of claims 1 to 14 coupled to the distal end (142-2) of the elongated stem (142), wherein the inlet tube adapter (242a) is fluidically connected to the inlet tube (102).
